# EUROPEAN PATENT APPLICATION

(11) **EP 2 204 724 A1**
(43) Date of publication of application: **07.07.2010**
(21) Application number: 08843169.7
(22) Date of filing: 17.10.2008
(51) Int. Cl.: G06F 3/041, G06F 3/048, H04M 1/02, H04M 1/247

(54) **ELECTRONIC DEVICE, ELECTRONIC DEVICE CONTROL METHOD, AND STORAGE MEDIUM CONTAINING ELECTRONIC DEVICE CONTROL PROGRAM**

(30) Priority: 26.10.2007 JP 2007278320
(71) Applicant: Nec Corporation, Tokyo 108-8001 (JP)
(72) Inventor: ONO, Hiroshi, Tokyo 108-8001 (JP)
(74) Representative: Glawe, Delfs, Moll
(86) International application number: PCT/JP2008/069283
(87) International publication number: WO 2009/054478

(57) **Abstract**

The electronic device may input erroneous data or its data input efficiency may be lowered. The electronic device includes: input means for inputting input information to the electronic device; insertion/extraction detection means for detecting an insertion/extraction state of a member detachable from the electronic device, into/from the electronic device; control means for generating display data according to the insertion/extraction state and judging the input information according to the data; and display means for performing display based on the display data.

## Description

### Technical Field

The present invention relates to an electronic apparatus, a control program of an electronic apparatus and a storage medium for a control method of an electronic apparatus capable of data input using a predetermined member (such as an input pen).

### Background Art

As a personal data terminal which an individual carries and uses (Personal Digital Assistant: hereinafter, referred to as "PDA"), there is a PDA equipped with a touch panel sensor in which data input is available on a display screen part by a pen for inputting (hereinafter, referred to as "input pen"). An input pen is also called a "stylus pen", and has a thin stick shape generally. There is known a portable information terminal in which this structure is applied to a cellular phone, enabling operation of the cellular phone and data input using an input pen.

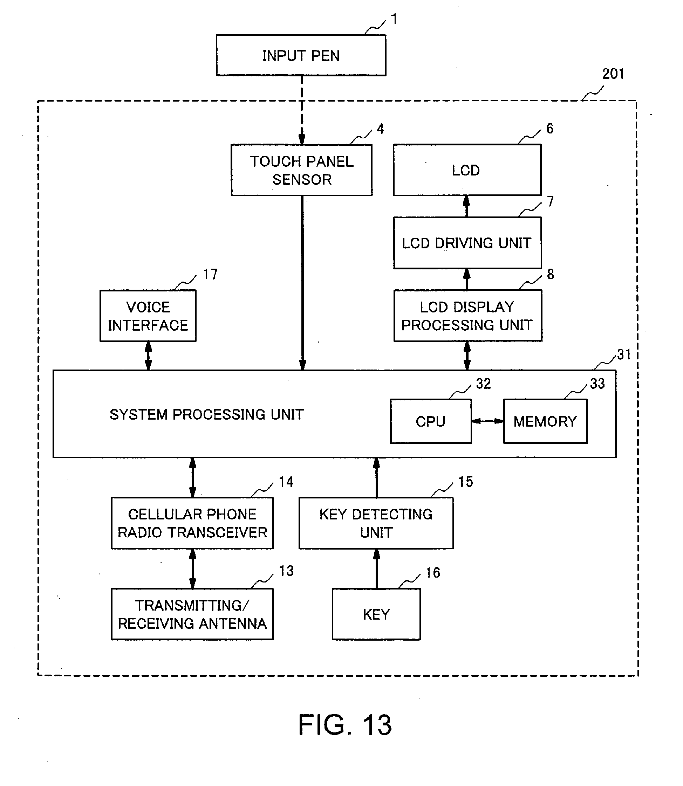

FIG. 13 is a form of the internal block diagram of a portable information terminal related to the present invention. A portable information terminal 201 is provided with a touch panel sensor 4, a liquid crystal display (hereinafter, referred to as "LCD") 6, a LCD driving unit 7, a LCD display processing unit 8, a system processing unit 31, a transmitting/receiving antenna 13, a cellular phone radio transceiver 14, a voice interface 17, a key 16 and a key detecting unit 15.

The LCD 6 is a display part, and the touch panel sensor 4 is stuck on its surface. The LCD driving unit 7 drives the LCD 6, and displays characters and the like on it. The LCD display processing unit 8 generates display data to be displayed to the LCD 6. The system processing unit 31 performs signal processing of the portable information terminal 201. The system processing unit 31 includes a central processing unit (hereinafter, referred to as "CPU") 32 which controls the whole of the portable information terminal 201, and a memory 33 which stores programs and data. The broken line between the input pen 1 and the touch panel sensor 4 shows that they are not connected electrically.

The voice interface 17 is an input/output interface of voice for using the portable information terminal 201 as a cellular phone. A microphone (not shown) with an external earphone inputs voice.

The transmitting/receiving antenna 13 sends and receives a wireless signal which connects the portable information terminal 201 and wireless network. The cellular phone radio transceiver 14 performs modulation and demodulation of a wireless signal.

When the user presses a character or a symbol shown on the LCD 6 with an end part of the input pen 1 or a finger of the user him/herself, the touch panel sensor 4 outputs the position which has been pushed. The system processing unit 31 determines the character or the function that the user has indicated from the position at which the touch panel sensor 4 has been pushed and the displayed content of the LCD 6. As a result, the LCD 6 can be operated as a virtual keypad (hereinafter, referred to as "virtual-keypad").

Operation of or data input to the portable information terminal 201 is possible from any of the key 16 and the touch panel sensor 4. The key detecting unit 15 transmits the content that the key 16 has been pushed to the system processing unit 31. The system processing unit 31 controls the portable information terminal 201 according to the content.

The input method using the touch panel sensor 4 has two kinds of input mode. One is a mode in which a user inputs data using the input pen 1, and the other one is a mode in which the user inputs data using a finger.

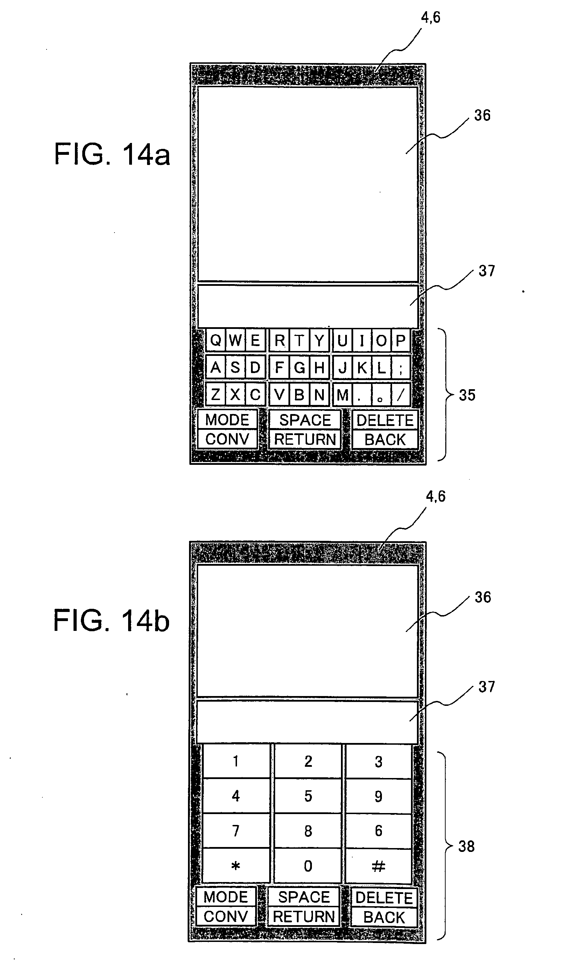

FIG. 14a is an example which shows a screen composition of the input mode in a portable information terminal related to the present invention where a user uses the input pen 1 (hereinafter, referred to as "detailed input mode"). The LCD 6 performs display on three areas: an input area 35, a document display area 36 and a character editing area 37.

In the input area 3 5, the LCD 6 displays input buttons for operating the portable information terminal 201 using the input pen 1. The buttons which the LCD 6 indicates can be made relatively small, because the user operates the portable information terminal 201 by pressing the touch panel sensor 4 with the thin tip of the input pen 1. Because the buttons can be made small, it is possible to display all alphabets of Roman alphabet on the screen. The LCD 6 also displays a "MODE" button which is used for changing symbols and input modes, and keys which have functions of "SPACE" "DELETE" and the like for editing characters.

The document display area 36 displays stored documents and received e-mails. The character editing area 37 displays inputted characters and a converted result or the like of the characters to Chinese characters.

Further, in the detailed input mode, data can be inputted quickly compared with the simple input mode which is described later, because an alphabet can be inputted by pressing it directly with the input pen 1.

On the other hand, FIG. 14b is an example which indicates the display mode when the user operates the portable information terminal 201 without using the input pen 1 (hereinafter, referred to as "simple input mode").

In the simple input mode, a user operates the portable information terminal 201 by pushing the touch panel sensor 4 using the tip of a fmger.

In the simple input mode, the LCD 6 also displays three areas: an input area 38, the document display area 36 and the character editing area 37.

In the simple input mode, because the user presses the touch panel sensor 4 with a finger, an area at which a fmger pushes the touch panel sensor 4 becomes wide compared with the case when the input pen 1 is used. For this reason, in the input area 38 of the simple input mode, a button with a wider area than that of the detailed input mode is displayed so that the user may not push an improper button with his/her finger. In the simple input mode, because the area of a single button is wide, the number of buttons which can be displayed on the screen is small compared with the detailed input mode.

In the simple input mode, the user selects a character to be inputted by pressing a number button a plurality of times. For example, when alphabets "A-C" are assigned to the number "1", the user inputs "C" by pushing down the number "1" three times. In the case of this method, the number of touches to the virtual-keypad becomes about three times or more on average as large as that of the case where a character is inputted directly.

As above, a portable information terminal equipped with a touch panel related to the present invention is provided with input modes corresponding to input by an input pen or direct input by a finger.

However, in a portable information terminal with a touch panel related to the present invention, selection of the input modes has no relation to an input method of information. Therefore, there is a problem that a user may input erroneous data. The reason will be described below.

For example, when the user keeps the input pen stored, it can be thought that the user has an intention to input data by a finger. Even in such a case, the screen might be in the detailed input mode. In the detailed input mode, because input is performed using an input pen, the LCD 6 indicates individual characters and functions by small buttons and figures as shown in FIG. 14a. For this reason, there has been a case where, when a user tries to input data using a fmger in the detailed input mode, the finger touches a button which the user does not intend. It has been also possible that, even if the user intends to press one button, the user presses an adjacent button at the same time. As a result, in a detailed input mode, when a user performs input using a finger, there has been a case that the user inputs wrong data to the portable information terminal 201. For this reason, when the current input mode is not a mode suitable for an input method of information, the user is needed to operate the portable information terminal 201 to change the input mode.

Alternatively, there has also been a problem that there is a case where efficiency of data input becomes low. That is, even if the user has an intention to use an input pen, the screen might display the simple input mode shown in FIG. 14b. As stated in the description of the simple input mode, in the simple input mode, user needs to input data by operation in which a lot of key touches are required. Therefore, regardless of using an input pen, when the input mode is the simple input mode, the user might be required longer time for input compared with the detailed input mode.

As a technological example related to the above-mentioned problem, there is a portable information terminal described in Japanese Patent Application Laid-Open No. 2004-030160(hereinafter, referred to as " Patent document 1"). Patent document 1 discloses a structure of a portable information terminal comprising: a stylus storage detecting unit for detecting a storing state of an input pen; and a data input invalidating means to invalidate data input from an indication/tablet integration unit when the input pen is being stored. When the input pen is being stored, the portable information terminal described on the Patent document 1 prevents incorrect input of data by invalidating data input from an unnecessary input means.

### Disclosure of Invention

### Technical Problem

However, when an input pen is being stored, the operation of a portable information terminal described in patent document 1 for preventing incorrect input makes input from the tablet invalidated completely. That is, in the portable information terminal described in patent document 1, when the input pen is stored, input using a finger is not also allowed. Accordingly, the problems of wrong data input and decrease of efficiency of data input which are caused by that there is no relation between selection of input modes and an input method of information cannot be settled by the technology described in the patent document 1.

The object of the present invention is to provide an electronic apparatus, a control method of an electronic apparatus and a program of an electronic apparatus for settling the problem that there are cases that a user inputs wrong data and that decrease of efficiency of data input is caused because there is no relation between selection of input modes and input methods of information.

### Technical Solution

An electronic apparatus of the present invention comprises: an input means which inputs input information to the electronic apparatus; an insert/remove detection means which detects a storage state of a member which can be separated from the electronic apparatus to the electronic apparatus; a control means which generates display data based on the storage state and distinguishes input information based on the display data; and a display means which performs indication according to the display data.

A control method of an electronic apparatus of the present invention, inputs input information to the electronic apparatus; detects a storage state of a member which can be separated from the electronic apparatus; generates a display data based on the storage state and distinguishes input information based on the display data; and performs indication according to the display data.

A storage medium of a control program of an electronic apparatus of the present invention is a storage medium readable by an electronic apparatus in which a control program of an electronic apparatus is recorded, and the control program of an electronic apparatus is a control program of an electronic apparatus for making said electronic apparatus function as: an input means which inputs input information; an insert/remove detection means which detects a storage state of a member which can be separated from the electronic apparatus to the electronic apparatus; a control means which generates display data based on the storage state and distinguishes input information based on the display data; and a display means which performs indication according to the display data.

### Advantageous Effects

An electronic apparatus of the present invention has the effect that input of wrong data is suppressed and that a user can input data to the electronic apparatus quickly.

### Brief Description of Drawings

[FIG. 1] FIG. 1 is a block diagram showing a structure only by elements indispensable to an electronic apparatus of the present invention.
[FIG. 2] FIG. 2 is an internal block diagram of a portable information terminal in a first exemplary embodiment of the present invention.
[FIG. 3] FIG. 3 is an external view of a portable information terminal in the first exemplary embodiment of the present invention.
[FIG. 4] FIG. 4 is an external view of an input pen used for a portable information terminal in the first exemplary embodiment of the present invention.
[FIG. 5a] FIG. 5a is a diagram showing an example of appearance of the screen of a portable information terminal in the first exemplary embodiment of the present invention. (Detailed input mode)
[FIG. 5b] FIG. 5b is a diagram showing an example of appearance of the screen of a portable information terminal in the first exemplary embodiment of the present invention. (Simple input mode)
[FIG. 5c] FIG. 5c is a diagram showing an example of appearance of the screen of a portable information terminal in the first exemplary embodiment of the present invention. (Detailed input mode)
[FIG. 6] FIG. 6 is a flow chart showing a form of cooperation of the insert/remove action of the input pen and a display screen in the first exemplary embodiment of the present invention.
[FIG. 7] FIG. 7 is an internal block diagram of a portable information terminal in a second exemplary embodiment of the present invention.
[FIG. 8a] FIG. 8a is an external view of the portable information terminal in the second exemplary embodiment of the present invention.
[FIG. 8b] FIG. 8b is an external view of the portable information terminal in the second exemplary embodiment of the present invention.
[FIG. 9a] FIG. 9a is an external view of an input pen with receiving antenna of a portable information terminal in the second exemplary embodiment of the present invention.
[FIG. 9b] FIG. 9b is an external view of an input pen with receiving antenna of a portable information terminal in the second exemplary embodiment of the present invention.
[FIG. 10] FIG. 10 is a sectional view of a storage part of an input pen with receiving antenna.
[FIG. 11] FIG. 11 is exemplary configuration of a screen of a portable information terminal when a digital TV application has been activated.
[FIG. 12] FIG. 12 is a flow chart showing a form of operation when receiving a digital TV broadcast using a portable information terminal in the second exemplary embodiment of the present invention.
[FIG. 13] FIG. 13 is a form of the internal block diagram of a portable information terminal related to the present invention.
[FIG. 14a] FIG. 14a is an example of screen composition of a portable information terminal related to the present invention. (Detailed input mode)
[FIG. 14b] FIG. 14b is an example of screen composition of a portable information terminal in relation to the present invention. (Simple input mode)

### Explanation of Reference

- 1: Input pen
- 4: Touch panel sensor
- 6: LCD
- 16: Key
- 17: Input pen with receiving antenna
- 18: Insert/remove detection switch
- 35, 38, 41, 44, 54: Input area
- 36, 42, 52: Document display area
- 37, 43, 53: Character editing area
- 45: Handwriting input area
- 51: TV screen display area
- 60: Storage part
- 61: Storage state detection switch
- 62: Extension state detection switch
- 63, 64: Push button
- 101, 102, 201: Portable information terminal.

### Best Mode for Carrying out the Invention

### [The First Exemplary Embodiment]

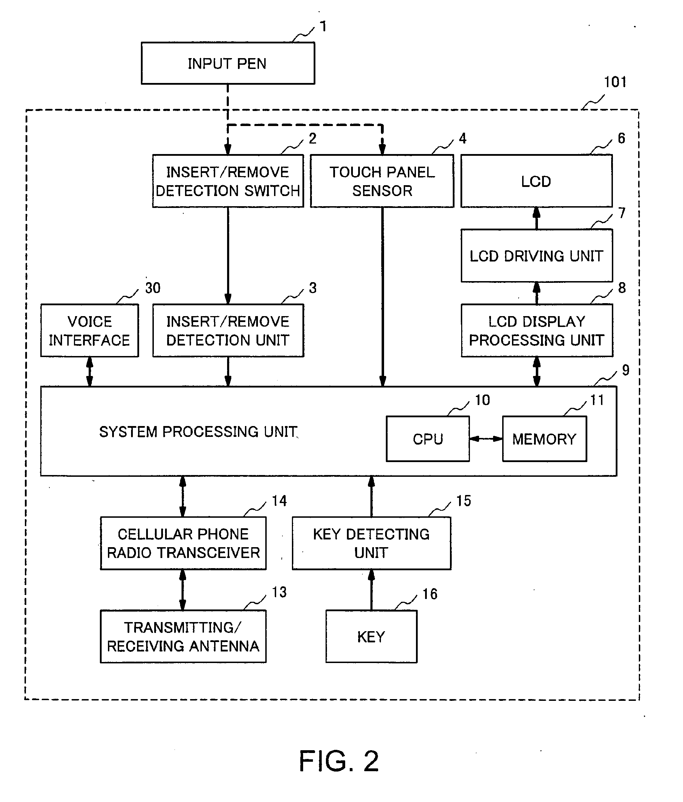

The first exemplary embodiment is an embodiment in which an electronic apparatus of the present invention is applied to a portable information terminal. FIG. 2 indicates an internal block diagram of a portable information terminal in the first exemplary embodiment. A portable information terminal 101 includes an insert/remove detection switch 2, an insert/remove detection unit 3, a touch panel sensor 4, an LCD 6, an LCD driving unit 7, a LCD display processing unit 8, a transmitting/receiving antenna 13, a cellular phone radio transceiver 14, a system processing unit 9, a voice interface 30, a key 16 and a key detecting unit 15.

The insert/remove detection switch 2 detects the storage state of the input pen 1. The insert/remove detection unit 3 determines insert and remove of the input pen 1 from a state of the insert/remove detection switch 2. The touch panel sensor 4 outputs a position at which an input means used by a user has touched to the system processing unit 9 as an electric signal. The LCD 6 is also called a display unit. The touch panel sensor 4 is stuck on the upper surface of the LCD 6. The touch panel sensor 4 may be called a contact detecting unit. The LCD driving unit 7 drives the LCD 6 and makes it display characters and buttons. The LCD display processing unit 8 generates display data of the LCD 6. The transmitting/receiving antenna 13 sends and receives a wireless signal which links the portable information terminal 101 and a wireless network. The cellular phone radio transceiver 14 performs modulation and demodulation of a wireless signal. The system processing unit 9 includes CPU 10 and a memory 11 which stores a program and data. The system processing unit 9 controls the whole of the portable information terminal 101 1 including cellular phone signal processing. The system processing unit 9 is also called a control unit. The key 16 is an operation input part. The key detecting unit 15 detects input of the key 16.

By making the input pen 1 touch on the touch panel sensor 4, a user can operate the portable information terminal 101 and input data.

The portable information terminal 101 1 is also equipped with functions as a PDA in addition to functions as a cellular phone capable of sending and receiving a mail. The portable information terminal 101 1 has a structure for storing the input pen 1 when the input pen 1 is not used. Meanwhile, in FIG. 2, broken lines which connect the input pen 1 to the insert/remove detection switch 2 and to the touch panel sensor 4 show that the input pen 1 is not connected with them electrically.

The LCD 6 is a display which indicates a button representing a character and a symbol. Because the touch panel sensor 4 is transparent, a user can visually recognize symbols and buttons which are indicated by the LCD 6 arranged in the backside of the touch panel sensor 4 through the touch panel sensor 4. When the user presses a displayed button with an end part of the input pen 1 or a finger of user him/herself, the touch panel sensor 4 detects the pushed position and outputs the position to the system processing unit 9 as location information. The system processing unit 9 judges the button indicated by the user from the location information inputted from the touch panel sensor 4 and the displayed information of the LCD 6. As a result, it becomes possible to operate the LCD display processing unit 8 as a virtual-keypad, and thereby enabling the portable information terminal 101 1 to perform functions and input of characters.

The voice interface 30 is an input/output interface of voice for using the portable information terminal 101 as a cellular phone. A microphone (not shown) with an external earphone inputs and outputs voice using a voice interface.

The system processing unit 9 performs the whole processing of the portable information terminal 101 such as control of inputted data and control of a screen display. The CPU 10 make the system processing unit 9 operate according to programs stored in the memory 11.

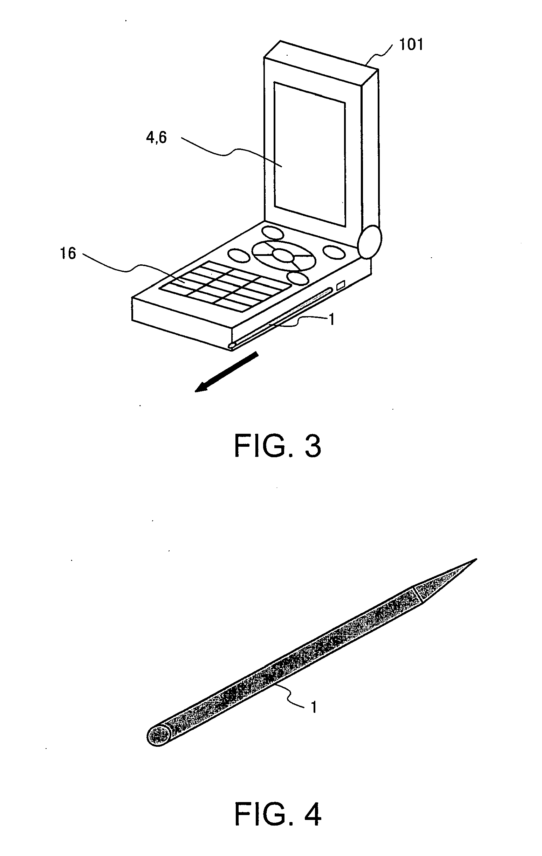

FIG. 3 is an external view of the portable information terminal 101 in the first exemplary embodiment of the present invention. The touch panel sensor 4 is stuck on the LCD 6. The input pen 1 is stored in a side face of the portable information terminal 101. When the input pen 1 is used, a user pulls out the input pen 1 and uses it. The insert/remove detection switch 2 (not shown) is provided inside of the storage part of the input pen 1. A switching state of the insert/remove detection switch 2 changes according to whether the input pen 1 is stored or whether it is removed. The insert/remove detection unit 3 (not shown) detects a storage state of the input pen 1 by a switching state of the insert/remove detection switch 2 and transmits this information to the system processing unit 9.

FIG. 4 is an external view of the input pen 1. The input pen 1 is a thin stick-like input device shaped like a pen.

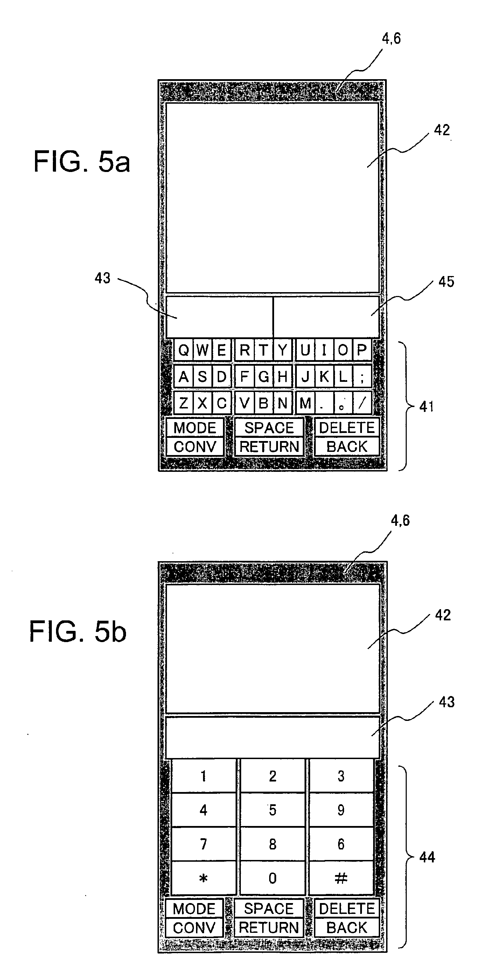

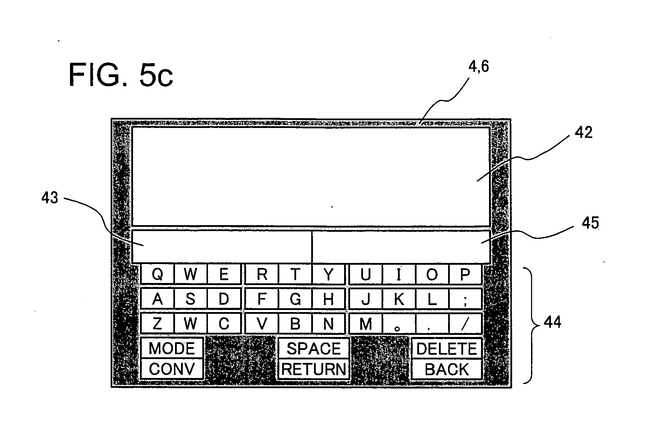

FIG. 5a, FIG. 5b and FIG. 5c are figures showing exemplary embodiments of screen composition of a portable information terminal in the first exemplary embodiment of the present invention. FIG. 5a and FIG. 5c are exemplary embodiments of screen composition of the detailed input mode and FIG. 5b is an exemplary embodiment of screen composition of the simple input mode. The LCD 6 displays a screen of a portable information terminal.

An input means which is the same as a keypad using a keyboard can be realized with its user indicating a button which the LCD 6 displays with the input pen 1 or a finger. In addition, the user can input a character in handwriting inside of the area which the LCD 6 displays for character input. Recognition of handwritten characters by the system processing unit 9 also realizes character input by handwriting.

The input method using the touch panel sensor 4 has two kinds of input mode. One is "detailed input mode" in which a user inputs data using the input pen 1, and the other is "simple input mode" in which the user inputs data using a finger.

The user can perform operation of or a data input to the portable information terminal 101 from both of the key 16 and the touch panel sensor 4 shown in FIG. 3 regardless of the input modes. The key detecting unit 15 transmits information on the pushed key 16 to the system processing unit 9. The system processing unit 9 controls the portable information terminal 101 according to the information.

FIG. 5a is an exemplary embodiment of appearance of the screen in the detailed input mode. When the input pen 1 is pulled out of the portable information terminal 101, the portable information terminal 101 becomes the detailed input mode automatically.

In the detailed input mode, the LCD 6 indicates four areas of: an input area 41; a document display area 42; a character editing area 43; and a handwriting input area 45.

In the input area 41, the LCD 6 indicates a key input screen for operating the portable information terminal 101 using the input pen 1. In the detailed input mode, as the user operates the portable information terminal 101 1 by pressing the touch panel sensor 4 with the tip of the input pen 1, a button which the LCD 6 displays can be one with a relatively small area. Because a button can be made small, it is possible to display all alphabets of Roman alphabet on the screen. In addition to them, the LCD 6 indicates symbol buttons, a "MODE" button for changing the input modes and buttons with functions of such as "SPACE" "DELETE" and the like for editing characters.

The "MODE" button is a button for changing between the detailed input mode and the simple input mode. The user can change an input mode of the portable information terminal 101 to the different input mode by compulsion by pressing this button. That is, when in the detailed input mode, the user can change the input mode of the portable information terminal 101 to the simple input mode by pressing the "MODE" button. Conversely, when in the simple input mode, the user can change the input mode of the portable information terminal 101 to the detailed input mode by pressing the "MODE" button.

The LCD 6 displays a body of stored documents and received e-mails in the document display area 42. The LCD 6 also indicates inputted characters and a result of conversion to Chinese characters or the like in the character editing area 43.

The handwriting input area 45 is an area for the user to recognize the content of handwriting of characters using the input pen 1. When the user handwrites a character in the handwriting input area 45, the touch panel sensor 4 makes the information of the location at which the handwriting is performed into data and transmits it to the system processing unit 9. The system processing unit 9 recognizes the character corresponding to the data. The character editing area 43 displays the recognized character.

In the detailed input mode, because an alphabet can be inputted by pressing it directly with the input pen 1, it is possible to input data quickly compared with the simple input mode described later.

On the other hand, FIG. 5b is an exemplary embodiment of a screen display in the simple input mode. In the simple input mode, the LCD 6 indicates three areas of an input area 44, a document display area 42 and a character editing area 43. In the simple input mode, a user pushes the touch panel sensor 4 by the tip of a fmger to operate the portable information terminal 101. When a user presses the touch panel sensor 4 with a finger, the user pushes a wider area on the touch panel sensor 4 compared with the case when the input pen 1 is used. For this reason, in the simple input mode, a button having a sufficiently large areas is displayed in the input area 44 compared with the case of the detailed input mode so that a mistake in pushing buttons may not be easily occur. In the simple input mode, because the input area 44 displays a button big, even a user who does not have good eyesight can operate the portable information terminal easily.

In the simple input mode, because the area of a single button is large, the number of buttons capable of being displayed on the screen becomes small compared with the detailed input mode. In the exemplary embodiment of the screen mode of FIG. 5b, the input area 44 is indicating numerals of 0-9, symbols and keys with functions of "MODE" "SPACE" "DELETE" and the like.

FIG. 5c is a diagram in which, the display direction of the screen is rotated by 90 degrees to the right in FIG. 5a to display the virtual-keypad displayed by the touch panel sensor 4 in a manner it is long in the longitudinal direction. As shown in FIG. 5a, when a so-called qwerty keyboard having a standard key arrangement which is usually used is indicated in an oblong display part, there may be a case where the width of buttons becomes small. In the exemplary embodiment of FIG. 5c, by removing the input pen, the screen display changes into the detailed input mode and the display direction of the virtual-keypad is rotated to the left by 90 degrees automatically. As a result, the same arrangement as a usual qwerty keyboard can be displayed on the screen of the portable information terminal 101 easily. For this reason, user's input operation becomes easier.

The displays of both FIG. 5a and FIG. 5c are acceptable in the detail mode. The user may set whether display of the screen is used in the state of FIG. 5a or it is used in the state of FIG. 5b. Alternatively, a portable information terminal may detect posture of the user holding the terminal itself and switch the display to one of shown in FIG. 5a or shown in FIG. 5c according to the detected direction. Further, although the rotative direction of the screen is 90 degrees to the left when the detailed input mode is set in this exemplary embodiment, it may be 90 degrees to the right.

### [Operation of the First Exemplary Embodiment]

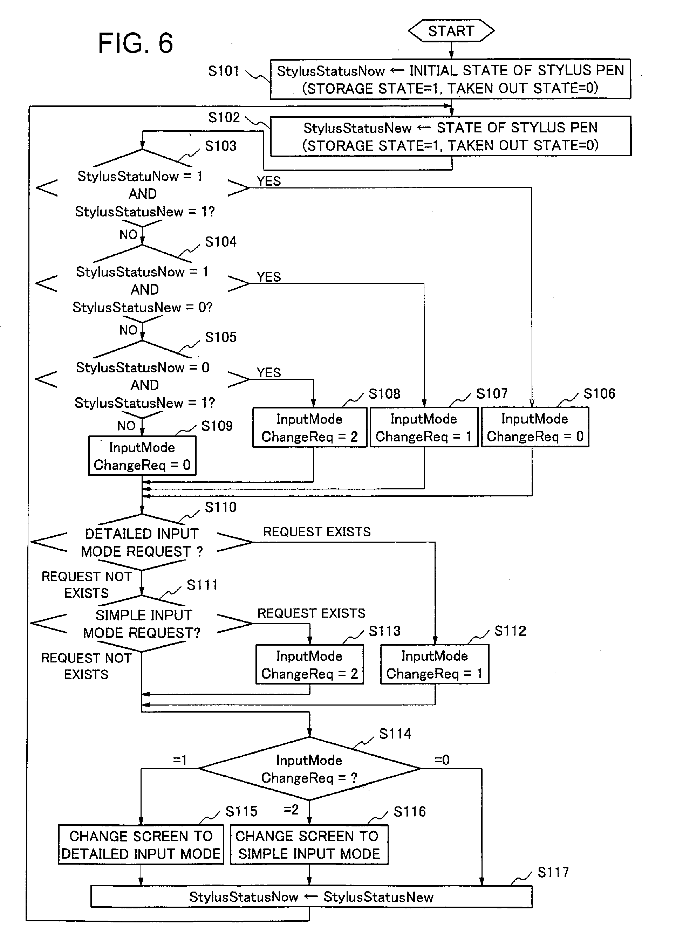

FIG. 6 is a flow chart showing a form of the cooperation of the insert/remove action of the input pen 1 and a display screen in the portable information terminal 101 of FIG. 2. The portable information terminal has variables corresponding to the functions and the states of the terminal in the interior, each variable holding a specific numerical value according to a function.

Operation of a portable information terminal using variables of a portable information terminal will be described referring to FIG. 6.

A variable StylusStatusNow holds a numerical value representing the current mounting state of the input pen 1 (S101). The held numerical value is "1" when the input pen 1 is stored in the portable information terminal and "0" when it is being taken out. When the mounting state of the input pen 1 changes, the numerical value that the variable StylusStatusNew holds changes (S102). Unless the mounting state of the input pen 1 changes, the variable StylusStatusNow and the variable StylusStatusNew hold the same numerical value. According to the combination of values of these two kinds of variables, a variable InputModeChangeReq takes any one of numerical values of "0", "1" and "2" (S103-S109). When there is not a change in the mounting state of the input pen 1, the numerical value of the variable InputModeChangeReq will be "0" (S106 and S109). When the mounting state of the input pen 1 changes from the storage state to the taken-out state, the numerical value of the variable InputModeChangeReq becomes "1" (S107), and when the mounting state of the input pen 1 changes from the taken-out state to the storage state, the numerical value of the variable InputModeChangeReq becomes "2" (S108).

Next, the portable information terminal distinguishes whether there is a change request of the input mode by user operation independently of the state of the input pen 1 (S110-S113). A change request of the input mode is performed by the user pressing the "MODE" button in the screen shown in Figs. 5a-5c. When the detailed input mode is requested, the numerical value of the variable InputModeChangeReq will be "1" (S112). When there is a request of the simple input mode, the numerical value of the variable InputModeChangeReq will be "2" (S113). Otherwise, the numerical value of the variable InputModeChangeReq remains the same as the previous one.

Next, the numerical value of this variable InputModeChangeReq is distinguished (S114), and when the numerical value of the variable InputModeChangeReq is "1", the input mode screen is changed to the detailed input mode (S115). When the numerical value of the variable InputModeChangeReq is "2", the mode is changed to the simple input mode (S116). When the numerical value of the variable InputModeChangeReq is "0" and after S115 and S116, the initial value is changed to the numerical value of the current state (the numerical value of variable StylusStatusNew is set to the numerical value of the variable StylusStatusNow) (S117), and the flow returns to the monitoring of a storage state change of the input pen 1 (S102).

In this way, the input mode screens switch over automatically according to a change in the mounting state of the input pen 1.

### [The Effect of the First Exemplary Embodiment]

As it has been described above, in the first exemplary embodiment, a portable information terminal has the function to detect a storage state of an input pen and indicates the most suitable input screen automatically according to a detection result of the storage state.

As a result, when a user uses an input pen, it has the effect that, by indicating a large number of keys, quick input is possible with a few key touches.

When the user inputs data by a finger, it has the effect that, by indicating large buttons, incorrect input of data does not occur easily.

In addition, when the user desires, the input mode can be changed compulsorily regardless of a storage state of the input pen.

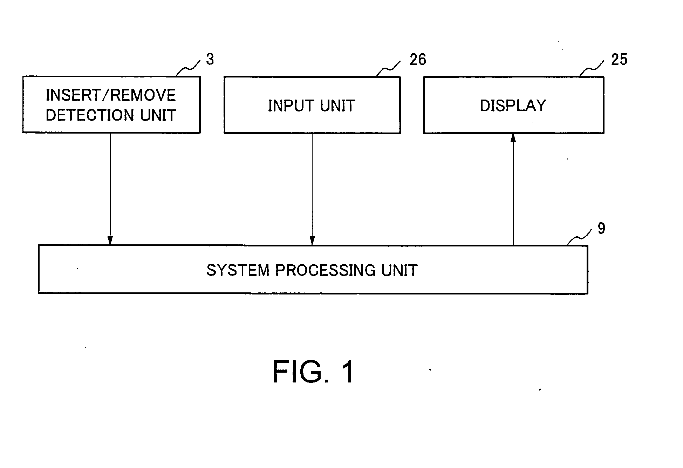

FIG. 1 is a block diagram showing a structure only by elements indispensable to an electronic apparatus of the present invention. In the block diagram of FIG. 1, an electronic apparatus of the present invention includes an insert/remove detection unit 3, an input unit 26, a display 25 and a system processing unit 9.

Here, the insert/remove detection unit 3 detects a storage state of a member which can be separated from the electronic apparatus to the electronic apparatus. The input unit 26 inputs input information to the electronic apparatus. The system processing unit 9 is a control unit which controls the electronic apparatus. The system processing unit 9 distinguishes the content of input information from the content of input to the input unit 26 and the content that is being displayed on the display 25.

That is, in the electronic apparatus having the structure shown in FIG. 1, according to a detection result of a storage state of the member by the insert/remove detection unit 3, the system processing unit 9 generates display data corresponding to each state, and changes indication of the display 25. Then, the content of input information is distinguished from the input content to the input unit 26 and the content that is being displayed on the display 25. As a result, an electronic apparatus described in FIG. 1 also settles the problem that there may be cases where wrong data is inputted and an efficiency of data input is down because the input mode is selected without relation to a storage state of the member.

### [The Second Exemplary Embodiment of the Invention]

In the second exemplary embodiment of the present invention, when a user pulls an input pen out of the body of a portable information terminal, an application configured in advance is activated automatically. By this structure, the number of times that the user operates a portable information terminal can be reduced.

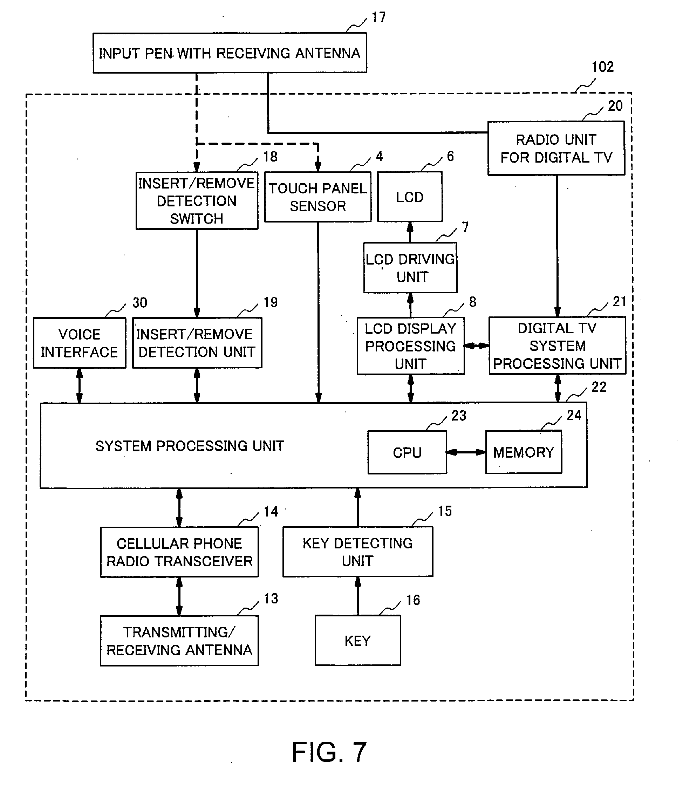

FIG. 7 is an internal block diagram of a portable information terminal in the second exemplary embodiment of the present invention.

A portable information terminal 102 is equipped with a function as a PDA in addition to a function as a cellular phone capable of sending and receiving mails like the portable information terminal 101 1 described in the first exemplary embodiment.

In FIG. 7, the portable information terminal 102 includes an input pen with receiving antenna 17, an insert/remove detection switch 18, an insert/remove detection unit 19, a touch panel sensor 4, a LCD 6, a LCD driving unit 7, a LCD display processing unit 8, a radio unit for digital TV 20, a digital TV system processing unit 21, a transmitting/receiving antenna 13, a cellular phone radio transceiver 14, a system processing unit 22, a key 16 and a key detecting unit 15.

The input pen with receiving antenna 17 is a removable input pen with an antenna element built-in. The insert/remove detection switch 18 detects a storage state of the input pen with receiving antenna 17. The insert/remove detection unit 19 determines storage and remove of the input pen with receiving antenna 17 from the state of the insert/remove detection switch 18. The touch panel sensor 4 identifies a position pushed by the input pen with receiving antenna 17. The LCD 6 is a display and the touch panel sensor 4 is stuck on the upper surface of the LCD 6. The LCD driving unit 7 drives the LCD 6 to make it display. The radio unit for digital TV 20 demodulates a wireless signal received by the input pen with receiving antenna 17. The digital TV system processing unit 21 decodes the demodulated signal from the radio transceiver for digital TV 20 according to the directions of the system processing unit 22 and performs conversion processing of the decoded signal into moving picture data. The LCD display processing unit 8 generates display data to be outputted to the LCD driving unit 7 from output signals of the system processing unit 22 and the digital television system processing unit 21. The transmitting/receiving antenna 13 sends and receives a wireless signal of a mobile telephone system. The cellular phone radio transceiver 14 performs modulation and demodulation of a wireless signal. The system processing unit 22 includes CPU 23 and a memory 24 which stores programs and data, and performs signal processing of the portable information terminal 102. The key 16 is a key for inputting characters and operating the portable information terminal 102. The key detecting unit 15 detects input of the key 16. The voice interface 30 is an input/output interface of voice for using the portable information terminal 102 as a cellular phone. A microphone with an external earphone (not shown) inputs and outputs voice using the voice interface 30.

The portable information terminal 102 is equipped with a receiving function of digital TV. The input pen with receiving antenna 17 has a function as an antenna which receives digital TV broadcasting in addition to a function as an input pen. The input pen with receiving antenna 17 works as a receiving antenna of digital TV broadcasting when in the state where it is stretched while being kept stored in the portable information terminal 102 (hereinafter, referred to as "extension state"). The radio unit for digital TV 20 demodulates a radio wave of digital TV broadcasting received by the input pen with receiving antenna 17 and outputs it to a digital TV system processing unit 21. The digital TV system processing unit 21 inputs screen data of digital TV broadcasting of a designated channel to the LCD display processing unit 8 according to the directions of the system processing unit 22. The LCD driving unit 7 drives the LCD 6 by output data of the LCD display processing unit 8. Voice of digital TV broadcasting is outputted to the voice interface 30 via the system processing unit 22. By this structure, watching of digital TV becomes possible in the portable information terminal 102. The input pen with receiving antenna 17 is connected with the radio transceiver for digital TV 20 electrically in the state stored in the portable information terminal 102.

The insert/remove detection switch 18 detects whether the input pen with receiving antenna 17 is stored in the portable information terminal 102, and whether the input pen with receiving antenna 17 is stretched while stored in the portable information terminal 102.

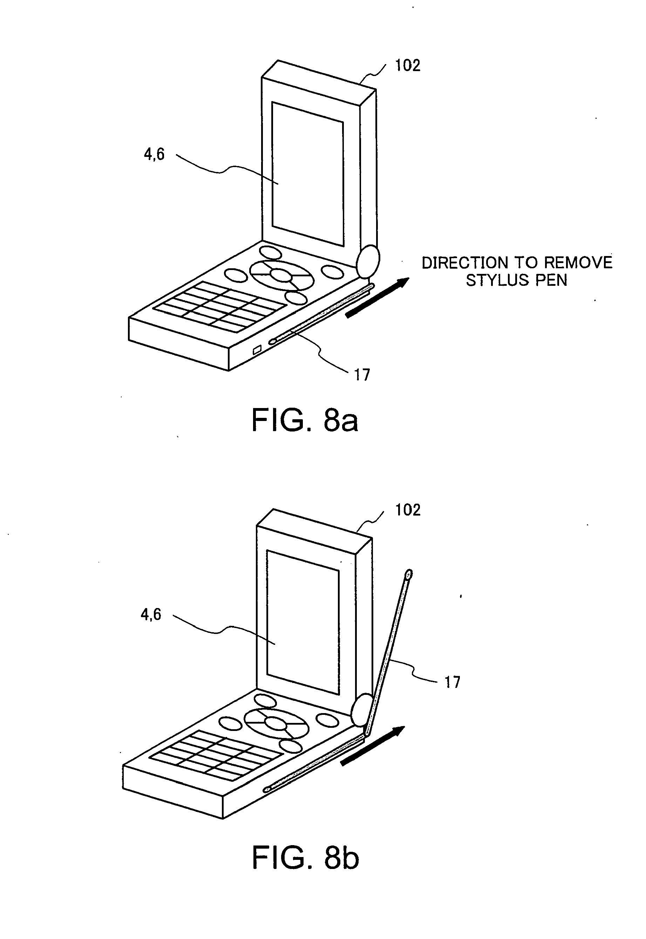

FIG. 8a and FIG. 8b are external views of the portable information terminal 102 of the second exemplary embodiment of the present invention. As shown in FIG. 8a, the input pen with receiving antenna 17 is stored in the portable information terminal 102. When the user pulls the input pen with receiving antenna 17 out of the portable information terminal 102, the input pen with receiving antenna 17 can be used as an input pen. Meanwhile, the transmitting/receiving antenna 13 for using the portable information terminal 102 as a cellular phone is not illustrated because it is built-in inside the case.

FIG. 8b is an external view when receiving a digital TV broadcast by extending the input pen with receiving antenna 17 while it is being kept stored.

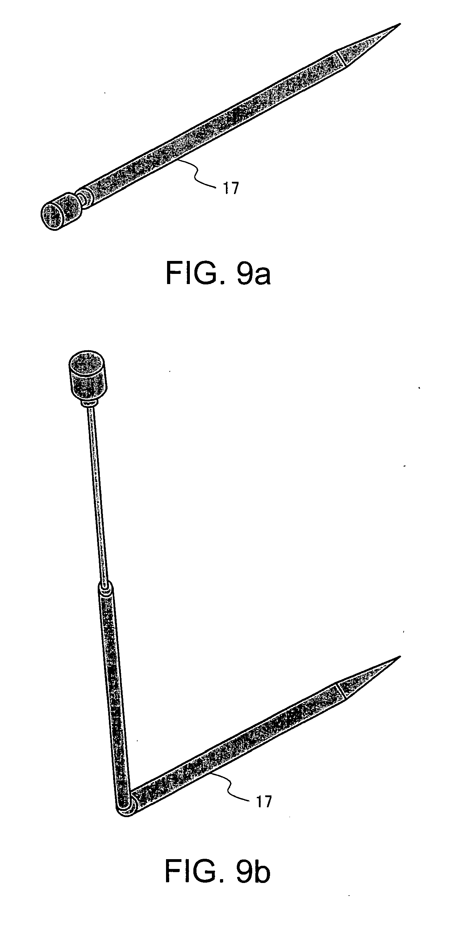

FIG. 9a and FIG. 9b are external views of the input pen with receiving antenna 17 of the portable information terminal 102 according to the second exemplary embodiment of the present invention. The input pen with receiving antenna 17 is an antenna having a structure that can be extended step by step. The input pen with receiving antenna 17 works as an input pen when in the state where the input pen with receiving antenna 17 is shortened as shown in FIG. 9a (hereinafter, referred to as "shortened state"). The input pen with receiving antenna 17 has a structure capable of being bent in its middle in any direction when in the extension state, and the user can change the direction of the antenna freely (FIG. 9b) so that receiving condition may become most suitable.

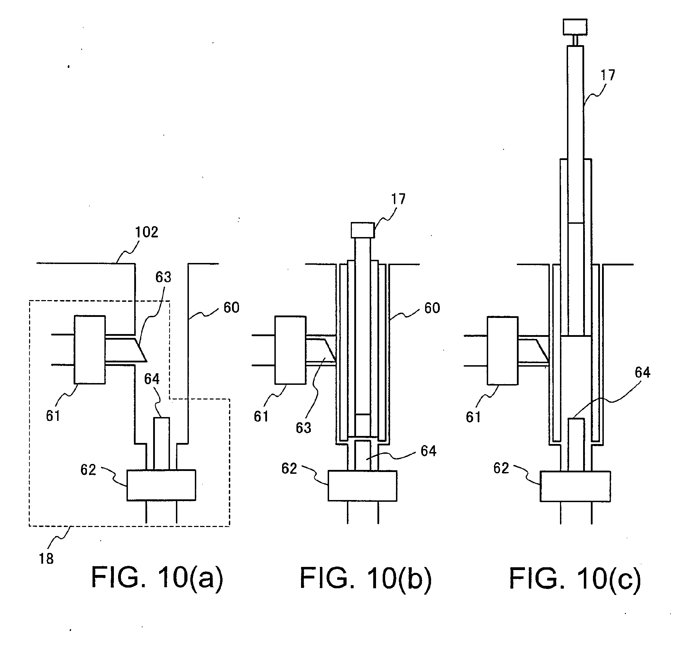

Fig. 10 is sectional view of a storage part 60 of the input pen with receiving antenna 17 installed in the portable information terminal 102. The insert/remove detection switch 18 includes a storage state detection switch 61 and an extension state detection switch 62. The storage state detection switch 61 is in the internal side of the storage part 60 of the portable information terminal 102, and the extension state detection switch 62 is in the bottom surface of the storage part 60. Each of the switches is a switch of momentary operation in which it is short-circuited only while push buttons 63 or 64 protruding to the storage part 60 are being pressed, and returns to open when the pressing force disappears. Meanwhile, in this figure, the bending mechanism of the input pen with receiving antenna 17 is not illustrated.

When the input pen with receiving antenna 17 is not stored in the storage part 60, both the storage state detection switch 61 and the extension state detection switch 62 are in the open state (FIG. 10(a)).

When the user stores the input pen with receiving antenna 17 in the storage part 60 in the shortened state, both the storage state detection switch 61 and the extension state detection switch 62 will be in the short-circuited state because push buttons 63 and 64 are pushed down (FIG. 10(b)).

When the stored input pen with receiving antenna 17 gets into the extension state, the core part of the input pen with receiving antenna 17 slides and moves toward the upper part of FIG. 10(c), and the push button 64 of the antenna extension state detection switch 62 returns to the position previous to pushing down of the push button 64 (FIG. 10 (c)). For this reason, although the extension state detection switch 62 is still in the opened state, the storage state detection switch 61 changes into the short-circuited state.

Accordingly, by knowing the conduction state of the storage state detection switch 61 and the extension state detection switch 62, the insert/remove detection unit can detect a storage state of the input pen with receiving antenna 17.

In addition, the portable information terminal 102 has a function to start an application program set in advance according to a storage state of the input pen with receiving antenna 17. In the portable information terminal 102, when the user stores the input pen with receiving antenna 17 leaving it in the extension state, a digital TV application program starts.

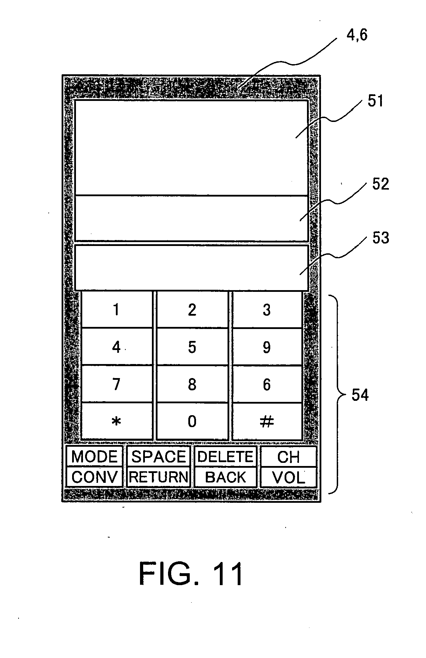

FIG. 11 is an exemplary configuration of a screen when a digital TV application has started in the portable information terminal 102 of the second exemplary embodiment. The portable information terminal 102 has a TV screen display area 51 in addition to a document display area 52, a character editing area 53 and an input area 54. Buttons such as "CH" for channel selection and "VOL" for volume adjustment are provided as a button which the LCD 6 indicates. Because the input pen with receiving antenna 17 is not being removed from the portable information terminal when digital TV broadcasting is watched, the screen will be one which is pursuant to the simple input mode described in FIG. 5b explained in the first exemplary embodiment.

When the user removes the input pen with receiving antenna 17 from the portable information terminal 102, the input mode becomes the detailed input mode automatically. When the user removes the input pen with receiving antenna 17, a mail application starts. Because digital TV cannot be watched in this occasion, screen composition will be one which is pursuant to FIG. 5a, for example.

### [Operation of the Second Exemplary Embodiment]

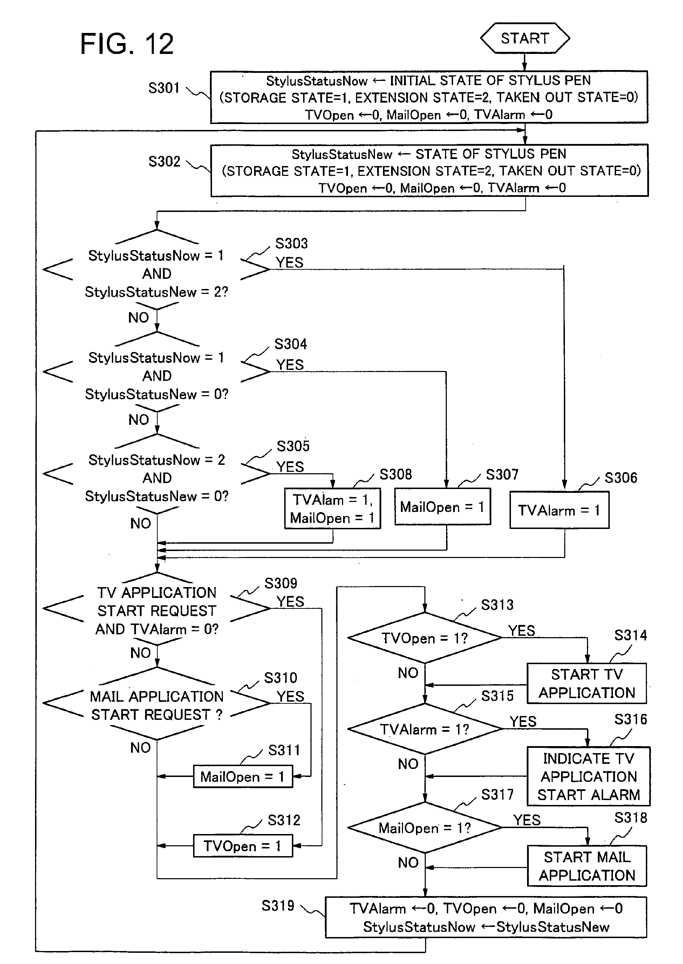

Next, an aspect of the operation when receiving digital TV broadcasting using the portable information terminal 102 will be described using a flow chart shown in FIG. 12. Meanwhile, because details of operation in which the input mode switches over automatically working with attachment and detachment of the input pen with receiving antenna 17 and of operation for inputting data to the portable information terminal 102 using the input pen with receiving antenna 17 is the same as that of the first exemplary embodiment in the second exemplary embodiment, the description will be omitted.

First, as an initial value, a variable StylusStatusNow has a numerical value representing the current mounting state of the input pen with receiving antenna 17 (S301). That numerical value is "1" when the input pen with receiving antenna 17 is in the state where it is being stored and connected electrically, "2" when in the state where it is being extended and connected electrically and "0" when in the state where it is being taken out (not connected electrically). Further, the initial values of a variable TVOpen, a variable MailOpen and a variable TVAlarm are"0".

When the mounting state of the input pen changes, the numerical value that variable StylusStatusNew holds also changes (S302). Then, according to a combination of the numerical values of the variable StylusStatusNow and the variable StylusStatusNew, the numerical values of the variable TVOpen, the variable MailOpen or the variable TVAlarm will be "1" (S303-S308).

When the mounting state of the input pen with receiving antenna 17 changes from the storage state into the extension state, the variable TVOpen will be "1" (S306); when it changes from the storage state into the taken-out state, the variable MailOpen will be "1" (S307); and when it changes from the extension state into the taken-out state, the variable TVAlarm and the variable MailOpen will be "1" (S308). In the cases of a change besides those, the values of the variables do not change.

Next, independently with a mounting state of the input pen with receiving antenna 17, presence or absence of a request by user operation for starting an application program is confirmed (S309-S312). When there is a start request for a digital TV application and the numerical value of the variable TVAlarm is "0", the numerical value of the variable TVOpen becomes "1" (S312); and when there is a start request for a digital TV application and the numerical value of the variable TVAlarm is "1", the numerical value of the variable TVOpen does not change.

When there is a start request for a mail application program, the numerical value of the variable MailOpen will be "1" (S311). The numerical value does not change in the case of other requests.

Next, according to the numerical value of these variables of the TVOpen, MailOpen and TVAlarm, necessity of starting the requested application program and of the alarm indication are determined (S313-S318).

When the numerical value of the variable TVOpen is "1", a digital TV application program starts automatically (S314).

That the numerical value of the variable TVAlarm is "1" shows that the input pen with receiving antenna 17 is being taken out. Because this means that the antenna has been detached from the portable information terminal 102, even if digital TV application starts, the user cannot watch digital TV broadcasting. For this reason, when the numerical value of variable TVAlarm is "1", the portable information terminal 102 indicates an alarm on the LCD 6 which shows that a problem will occur if a digital TV application program is executed (S316).

When the numerical value of the variable MailOpen is "1", a mail application program starts automatically (S318). After that, the value of each variable is initialized (S319), and the procedure returns to status monitoring of the input pen with receiving antenna 17.

In this way, according to the mounting state of the input pen with receiving antenna 17, an application program set in advance such as a mail application and a digital TV application starts automatically.

In this exemplary embodiment, a digital TV application program and a mail application program are assumed in advance as a target of automatic activation. However, applications which are activated automatically are not limited to these. An application which is activated automatically may be designated by the user in an input screen of the portable information terminal 102. By changing the designated application, it is possible to activate any applications automatically in conjunction with a storage state of the input pen with receiving antenna 17. For example, it is possible to configure to activate a text editor, a drawing program or a game program which uses the input pen with receiving antenna 17 as an input means when the input pen with receiving antenna 17 is removed.

### [The Effect of the Second Exemplary Embodiment]

In addition to the effects of the first exemplary embodiment, the second exemplary embodiment of the present invention has the effects as described below.

The first effect is that the user's convenience is improved because it is possible to provide desired functions to the user of a portable information terminal more easily and earlier.

The reason of this is that activation of an application program which the user desires is made automatically working with pulling out operation of the input pen with receiving antenna 17 by monitoring a storage state of the input pen with receiving antenna 17. For example, application for watching digital TV can be started by extending the input pen with receiving antenna 17 while leaving it stored. Or, a mail application program can be started by pulling the input pen with receiving antenna 17 out of the portable information terminal completely.

The second effect is that it is possible to prevent wrong operation of a portable information terminal by the user.

The reason is that, when activation of an application program which uses a receiving antenna is made while the input pen is being pulled out by mistake of the user, it is possible to alert the user by monitoring the state of the input pen with receiving antenna 17.

The third effect is to contribute to downsizing and thinning of a portable information terminal.

The reason is that a terminal can be downsized without failing functions by integrating an input pen and a receiving antenna with a common member.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application 2007-278320, filed on October 26, 2007, the disclosure of which is incorporated herein in its entirety by reference.

## Claims

1. An electronic apparatus comprising:
an input means for inputting input information to said electronic apparatus;
an insert/remove detection means for detecting a storage state of a member which can be separated from said electronic apparatus to said electronic apparatus;
a control means for generating display data based on said storage state, and distinguishing said input information based on said display data; and
a display means for performing display according to said display data.

2. The electronic apparatus according to claim 1, wherein
said input means comprises a contact detecting means for detecting a contact position touched from outside, and outputting a position signal, and wherein
said control means distinguishes said input information based on said position signal and said display data.

3. The electronic apparatus according to claim 2, wherein
said control means determines said contact position based on said position signal and distinguishes said input information based on said display data corresponding to said contact position.

4. The electronic apparatus according to any one of claims 1 to 3, wherein
said control means generates said display data for displaying a button of a first form when said storage state is in a first state where said member is not being stored in said electronic apparatus, and generates said display data for displaying a button of a second form with a larger area than said first form when said storage state is in a second state where said member is being stored in said electronic apparatus.

5. The electronic apparatus according to any one of claims 1 to 4, wherein
said control means starts an application program which is correlated to said storage state in advance corresponding to said storage state.

6. The electronic apparatus according to claim 4 comprising a radio circuit means, wherein
said member is extendable and has an antenna element which is connected to said radio circuit means when said storage state is said second state.

7. The electronic apparatus according to claim 6, wherein
said radio circuit means operates when said storage state is said second state and said member is in an extended state.

8. The electronic apparatus according to claim 7, wherein
said control means starts a first application program for performing a predetermined processing using said radio circuit means when said storage state is said second state and said member is in said extended state.

9. The electronic apparatus according to claim 8, wherein said radio circuit means is a television broadcast receiving radio circuit; and wherein
said first application program is a program for displaying a screen of said television broadcast.

10. The electronic apparatus according to any one of claims 8 and 9, wherein
predetermined display is performed when said storage state becomes said first state while said radio circuit means and said first application program are operating.

11. A control method of an electronic apparatus comprising steps of:
inputting input information to said electronic apparatus;
detecting a storage state of a member which can be separated from said electronic apparatus;
generating display data based on said storage state;
distinguishing said input information based on said display data; and
performing display according to said display data.

12. The control method of an electronic apparatus according to claim 11 comprising steps of:
detecting a contact position contacted from outside;
outputting a position signal which indicates said contact position; and distinguishing said input information based on said contact position and said display data.

13. The control method of an electronic apparatus according to claim 12 comprising steps of:
determining said contact position based on said position signal; and
distinguishing said input information based on said display data corresponding to said contact position.

14. The control method of an electronic apparatus according to any one of claims 11 to 13 comprising steps of:
generating said display data for displaying a button of a first form when said storage state is a first state where said member is not being stored in said electronic apparatus; and generating said display data for displaying a button of a second form with a larger area than said first form when said storage state is a second state where said member is being stored in said electronic apparatus.

15. The control method of an electronic apparatus according to any one of claims 11 to 14, comprising a step of starting an application program which is correlated to said storage state in advance corresponding to said storage state.

16. The control method of an electronic apparatus according to claim 14 comprising a step of operating a radio circuit provided in said electronic apparatus when said storage state is said second state and said member is in an extended state.

17. The control method of an electronic apparatus according to claim 16 comprising a step of starting a first application program which performs predetermined processing using said radio circuit when said storage state is said second state and said member is in said extended state.

18. The control method of an electronic apparatus according to claim 17, wherein said radio circuit is a television broadcast receiving radio circuit; and wherein
said first application program is a program which displays a screen of said television broadcast.

19. The control method of an electronic apparatus according to any one of claims 17 and 18 comprising a step of performing predetermined display when said storage state becomes said first state while said radio circuit and said first application program are operating.

20. A storage medium in which a control program of an electronic apparatus is recorded and which is readable by said electronic apparatus, wherein
said electronic apparatus control program is an electric apparatus control program for making said electronic apparatus function as: an input means for inputting input information; an insert/remove detection means for detecting a storage state of a member which can be separated from said electronic apparatus to said electronic apparatus;
a control means for generating display data based on said storage state, and distinguishing said input information based on said display data; and
a display means for performing display according to said display data.
